Europäisches Patentamt

European Patent Office

Office européen des brevets

(19)

(11) Numéro de publication : **0 048 185**
**B1**

# (12) FASCICULE DE BREVET EUROPÉEN

(45) Date de publication du fascicule du brevet :
28.11.84

(21) Numéro de dépôt : 81400015.4

(22) Date de dépôt : 08.01.81

(51) Int. Cl.³ : **F 21 S 1/00**, G 03 B 15/02,
**F 21 P 5/00**

(54) **Source de lumière multi-effets à usage notamment de projecteur pour la photographie, le cinéma et la télévision, ou de luminaire.**

(30) Priorité : 11.09.80 FR 8019612

(43) Date de publication de la demande :
24.03.82 Bulletin 82/12

(45) Mention de la délivrance du brevet :
28.11.84 Bulletin 84/48

(84) Etats contractants désignés :
AT BE CH DE FR GB IT LI LU NL SE

(56) Documents cités :
US-A- 3 377 478
US-A- 4 075 775

(73) Titulaire : **BALCAR**
**32, Boulevard Flandrin**
**F-75116 Paris (FR)**

(72) Inventeur : **Ballozian, Mardick**
**15, route de Val Martin**
**Sainte-Gemme F-78810 Feucherolles (FR)**

(74) Mandataire : **Tony-Durand, Serge**
**Cabinet Tony-Durand 22, Boulevard Voltaire**
**F-75011 Paris (FR)**

Jouve, 18, rue St-Denis, 75001 Paris, France

## Description

La présente invention a pour objet un dispositif constitué par une source de lumière à usage de projecteur, pour la photographie, le cinéma ou la télévision, ou de luminaire, ou à usage de panneau lumineux, ainsi qu'un procédé de fabrication d'un tel dispositif.

On sait que les appareils d'éclairage ou « projecteurs » utilisés jusqu'à maintenant pour le cinéma, la photographie ou la télévision ont généralement une face avant carrée ou circulaire. Par ailleurs, un sujet étant placé devant ces projecteurs, la rotation des projecteurs sur eux-mêmes ne permet pas de modifier l'ombre portée sur le fond par le sujet.

On sait aussi que la lumière diffusée par une source lumineuse plane diminue comme le cosinus de l'angle entre une perpendiculaire à ce plan et ce dernier, lorsque le sujet éclairé se déplace latéralement devant la source jusqu'à parvenir au plan de celle-ci. En d'autres termes, la lumière reçue par le sujet, qui est maximum devant la source lumineuse, tombe pratiquement à zéro lorsque le sujet se trouve sur le côté et dans le plan de la source lumineuse.

On sait par ailleurs que chaque source de lumière a ses caractéristiques propres en ce qui concerne :
1. l'intensité lumineuse,
2. sa couleur et éventuellement le degré de saturation d'une seule couleur,
3. l'angle éclairé,
4. le contraste de l'éclairage,
5. la netteté de l'ombre projetée derrière le sujet,
6. la brillance des reflets,
7. la grandeur des reflets.

L'invention a pour but la réalisation d'un appareil d'éclairage capable de faire varier au moins l'une de ces caractéristiques précitées et le cas échéant la totalité de celles-ci, grâce à sa conception particulière, cet appareil devant également pouvoir réduire la diminution de lumière avec le cosinus de l'angle éclairé.

Le dispositif visé par l'invention comporte une enveloppe polyédrique dont le fond porte une source lumineuse, cependant que certaines des parois sont translucides.

Il a été proposé des appareils d'éclairage répondant à une telle définition de caractère général. Ainsi le brevet US-A-4075,775 décrit un diffuseur de lumière comportant une enveloppe polyédrique. Ce diffuseur est uniquement conçu pour être installé contre un plafond pour diffuser la lumière émise par un tube fluorescent.

Ce dispositif qui est constitué par un corps creux dont les parois sont translucides, est simplement apte à diffuser de la lumière, mais il est absolument incapable de résoudre le problème qui est à la base de la présente invention.

Pour résoudre ce problème, la présente invention a pour objet un dispositif lumineux à usage de projecteur pour la photographie, le cinéma ou la télévision, comportant une enveloppe polyédrique formée de parois planes et dont le fond rectangulaire réfléchissant comporte une source lumineuse, cependant que certaines des parois sont translucides, caractérisé en ce que les deux parois partant des longs côtés du fond sont opaques alors que les deux parois partant des côtés courts, qui sont translucides, sont inclinées par rapport au fond, l'une vers l'autre pour que leurs bords extrêmes délimitent, avec les bords extrêmes des parois opaques, une face centrale destinée à recevoir des accessoires divers, tels que diffuseurs, grille-spot, filtre.

Suivant un mode de réalisation de l'invention, le dispositif comporte un fond rectangulaire éventuellement percé d'une ouverture pour l'introduction de la source lumineuse, deux faces triangulaires assemblées aux grands côtés du fond suivant une inclinaison déterminée par rapport au plan de ce fond, et une feuille translucide de diffusion de la lumière, fermant l'ouverture libre du volume délimitée par le fond et des deux faces latérales triangulaires en étant assujettie aux côtés des faces latérales triangulaires, lesquelles ainsi que le fond sont constitués en un matériau opaque et réfléchissant.

Suivant une autre forme de réalisation de l'invention, le dispositif comporte deux faces latérales trapézoïdales, polygonales ou incurvées, assemblées à un fond rectangulaire suivant une inclinaison déterminée par rapport à celui-ci, au moins deux faces frontales translucides ou opalines inclinées et une face centrale rectangulaire ou carrée reliant lesdites faces frontales inclinées.

Suivant une particularité de cette forme de réalisation, la face frontale placée entre les faces translucides est pourvue d'accessoires tels que grille-spot, diffuseur, filtres.

Suivant une autre particularité de l'invention, le dispositif est muni d'au moins deux volets réfléchissants montés de part et d'autre de la source lumineuse à l'intérieur de l'enveloppe et articulés sur le fond entre les surfaces latérales, de façon à pouvoir se placer entre deux positions extrêmes, à savoir une première position dans laquelle ils sont placés dans une position transversale au plan du fond et une seconde position dans laquelle ils sont rabattus sur celui-ci, des moyens étant prévus pour manœuvrer ces volets afin de les placer dans la position angulaire choisie et pour les fixer dans cette position.

Suivant un autre mode de réalisation de cette invention, l'enveloppe polyédrique comporte aussi des volets réfléchissants extérieurs placés de part et d'autre des extrémités du fond afin de pouvoir réfléchir la face transversale contiguë. Chaque volet réfléchissant pivote autour d'un axe permettant ainsi de faire varier son angle par rapport à la face translucide, et permettant aussi d'être fermé contre ladite face translucide.

Dans une autre forme de réalisation différente,

le dispositif comprend une enveloppe tétraédrique dont au moins une face est opaque et réfléchissante et agencée pour recevoir une source lumineuse à l'intérieur de ce tétraèdre, les autres faces étant translucides.

Les faces translucides diffusant la lumière de la lampe placée à l'intérieur de l'enveloppe, cet appareil peut être utilisé par exemple comme luminaire dans des pièces d'habitation.

Les dimensions et la géométrie des projecteurs pouvant être constitués par les dispositifs précités sont choisies en fonction des effets particuliers recherchés. Ces effets peuvent être mieux compris compte tenu des observations suivantes :

Lorsqu'une source de lumière est maintenue à distance constante du sujet éclairé par celle-ci, l'ombre projetée sur le fond par le sujet est d'autant plus nette que la source de lumière est plus petite. Inversement, l'ombre portée par le sujet est d'autant plus diffuse que la source lumineuse est plus grande. Si la longueur et la largeur de la source lumineuse sont pratiquement égales de façon que la source soit symétrique (ronde ou carrée par exemple), l'ombre portée aura une netteté uniforme, indépendamment de la rotation de la source lumineuse. Cependant, si l'on éclaire un objet cylindrique vertical par une source lumineuse de face asymétrique, l'ombre portée par l'objet est plus nette si l'on fait tourner la source lumineuse autour de son axe de façon à placer cette source parallèlement avec l'axe longitudinal du sujet. Si l'on fait maintenant tourner la source lumineuse, on constate que la netteté de l'ombre devient progressivement plus diffuse, la diffusion maximum étant obtenue lorsque la plus grande dimension de la source lumineuse est perpendiculaire au cylindre vertical constitué par l'objet.

Le projecteur selon l'invention permet donc, contrairement aux projecteurs habituels, l'obtention d'effets lumineux variés relatifs à la netteté de l'ombre du sujet sur le fond, par rotation autour de son axe ainsi que par variation de la longueur effective de la source lumineuse.

Suivant une forme de réalisation du procédé de fabrication visé par l'invention, on part d'une feuille rectangulaire, on trace sur celle-ci les côtés du fond suivant une inclinaison choisie par rapport à la diagonale du rectangle, puis on plie la feuille le long des côtés du fond afin d'obtenir deux surfaces latérales ayant une inclinaison choisie par rapport au fond, on complète l'enveloppe en formant deux faces frontales en un matériau diffuseur translucide qu'on assemble aux côtés des faces latérales précitées.

Ce mode de fabrication est particulièrement simple et économique dans le cas où le fond est placé diagonalement dans le rectangle, en ce qui concerne les pertes de matière utilisée (normalement inférieures à 5 %), et nécessite un minimum de main-d'œuvre. A titre de matériau utilisable on citera par exemple le polypropylène, les deux bords pliés du fond remplissant un rôle de charnière qui permet aux deux côtés latéraux d'être pliés à plat avec le fond.

D'autres particularités et avantages de l'invention apparaîtront au cours de la description qui va suivre, faite en référence aux dessins annexés sur lesquels on a représenté, à titre d'exemples non limitatifs, plusieurs formes de réalisation de l'appareil d'éclairage visé par l'invention ainsi que de son procédé de fabrication.

La figure 1 est une vue en perspective avec arrachements d'une première forme de réalisation du dispositif à usage de projecteur, notamment pour la photographie, le cinéma et la télévision visé par l'invention.

La figure 2 est une vue en plan, explicative d'une première forme de mise en œuvre du procédé de fabrication du dispositif de la figure 1.

Les figures 3 et 4 sont des vues en plan, explicatives de deux autres formes de mise en œuvre du procédé de fabrication de ce dispositif.

La figure 5 est une vue en perspective du côté avant, à échelle réduite, du dispositif de la figure 1, dont la face frontale médiane est vide, pourvu en outre de volets réflecteurs extérieurs pivotants.

La figure 6 est une vue analogue à la figure 5 montrant le projecteur équipé d'une grille-spot sur sa face frontale.

La figure 7 est une vue en perspective analogue à la figure 6 montrant le dispositif équipé également de deux coupe-flux.

La figure 8 est une vue en plan de différents accessoires pouvant équiper le dispositif d'éclairage de la figure 1.

La figure 9 est une vue de dessus en plan schématique de l'appareil d'éclairage de la figure 1, montrant en particulier les volets réfléchissants intérieurs équipant ce dispositif, ainsi que deux volets réfléchissants extérieurs.

La figure 10 est une vue de dessus en plan d'une variante de réalisation du dispositif de la figure 5 et 6.

La figure 11 est une vue en perspective de l'appareil de la figure 10.

La figure 12 est une vue en élévation latérale du projecteur de la figure 1.

La figure 13 est une vue de dessus en plan d'une bande à partir de laquelle on peut fabriquer une enveloppe tétraédrique destinée à constituer par exemple un luminaire.

La figure 14 est une vue en perspective schématique d'une enveloppe tétraédrique obtenue à partir d'une bande telle que celle illustrée à la figure 13.

La figure 15 est une vue de dessus en plan schématique d'une forme de réalisation du projecteur visé par l'invention, dans laquelle celui-ci est équipé de quatre volets réfléchissants intérieurs.

La figure 16 est une vue en perspective schématique de l'enveloppe obtenue par la mise en œuvre du procédé illustré à la figure 4.

La figure 17 est une vue en perspective du dispositif représenté à la figure 11, placé dans un boîtier extérieur.

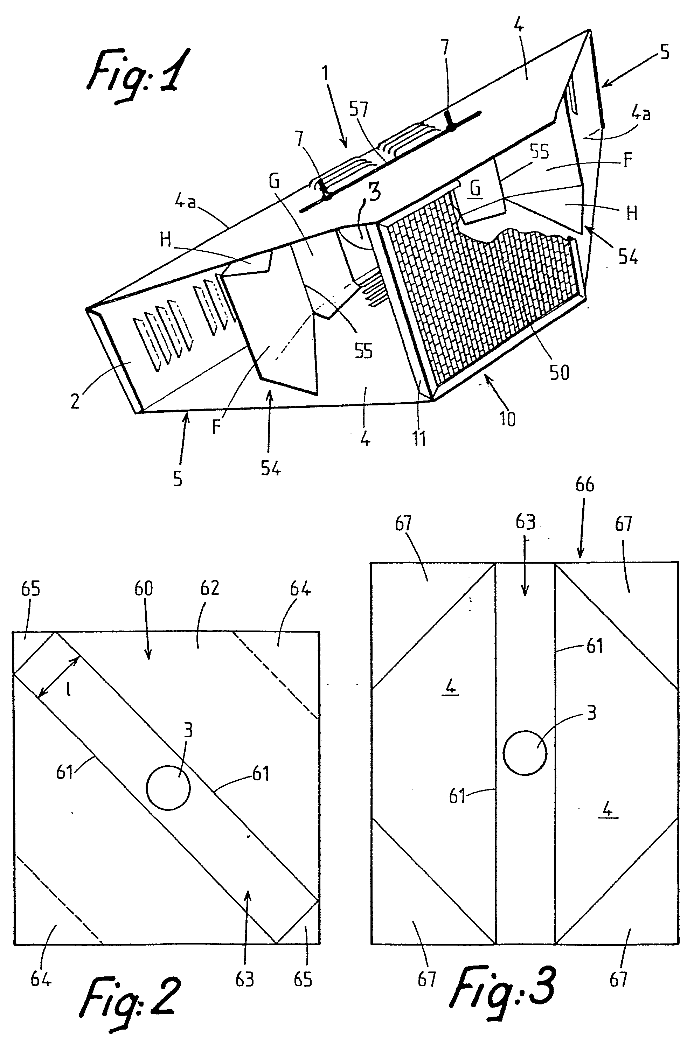

En se reportant à la figure 1, on voit un dispositif constitué par une source de lumière à multi-effets, susceptible d'être utilisé en particulier comme projecteur pour la photographie, le cinéma et la télévision, mais qui peut aussi recevoir d'autres applications, par exemple comme panneau lumineux portant des indications déterminées.

Cet appareil d'éclairage, désigné par la référence générale 1, comporte un fond 2 rectangulaire percé d'une ouverture 3 pour l'introduction d'une source lumineuse non représentée, deux faces latérales 4 formées de trapèzes contigus aux grands côtés 4a du fond 2, suivant une inclinaison déterminée par rapport au plan de ce fond. Le dispositif comporte également deux feuilles translucides de diffusion de la lumière non représentées pour la clarté du dessin, choisies en un matériau approprié, et qui ferment partiellement l'ouverture libre du volume délimité par le fond 2 et par les deux faces trapézoïdales 4. Entre les deux feuilles translucides, est réservée une face médiane 10, carrée dans l'exemple décrit mais qui peut également être rectangulaire. Un cadre transparent 11 formant entretoise et pouvant recevoir les grilles-spots et filtres, est encastré dans le pourtour de la face centrale 10. Les feuilles translucides 5 sont assujetties aux côtés des deux trapèzes 4 par tout moyen connu approprié, les trapèzes 4 et le fond 2 étant constitués en un matériau opaque tel qu'un métal ou alliage léger, ou matière plastique approprié.

L'inclinaison des faces trapézoïdales 4 par rapport au fond 2 peut varier : par exemple les deux faces 4 peuvent être positionnées de façon à former un angle supérieur à 90 degrés avec le fond 2, en étant ainsi légèrement divergentes.

Les deux surfaces translucides assujetties aux faces 4 sont ainsi inclinées par rapport au fond 2 et aussi l'une vers l'autre, de sorte qu'elles sont visibles latéralement et dans une direction parallèle au fond 2.

Dans l'exemple illustré à la figure 1, les faces trapézoïdales 4 et le fond 2 sont obtenus d'une seule pièce à partir d'une feuille par pliage des faces trapézoïdales 4 de chaque côté du fond 2.

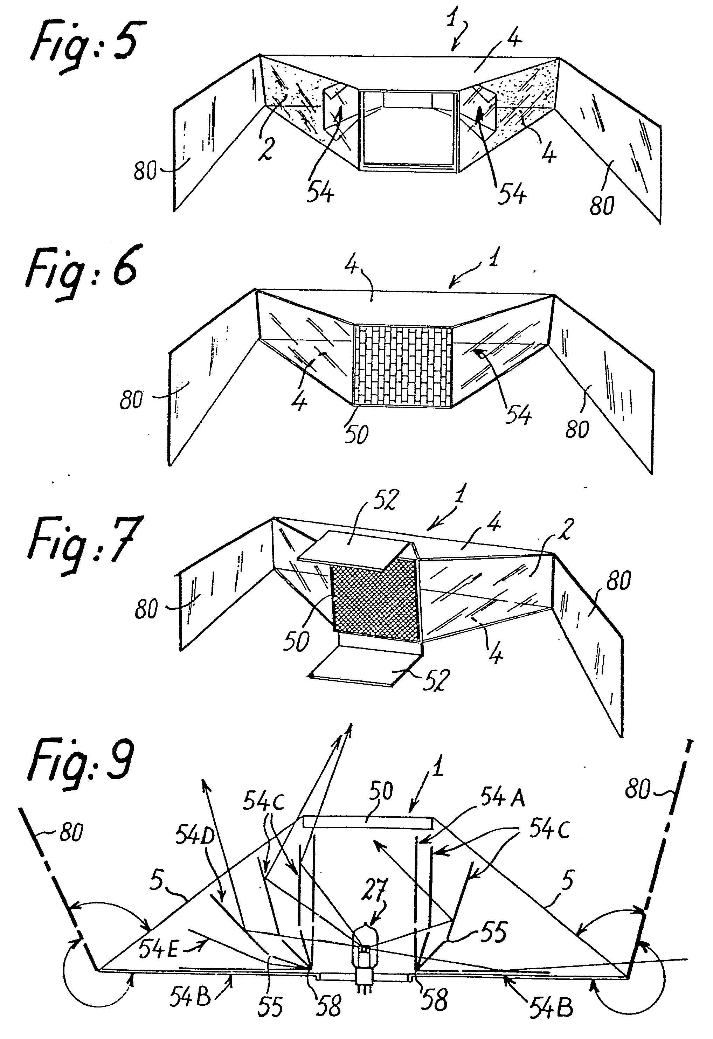

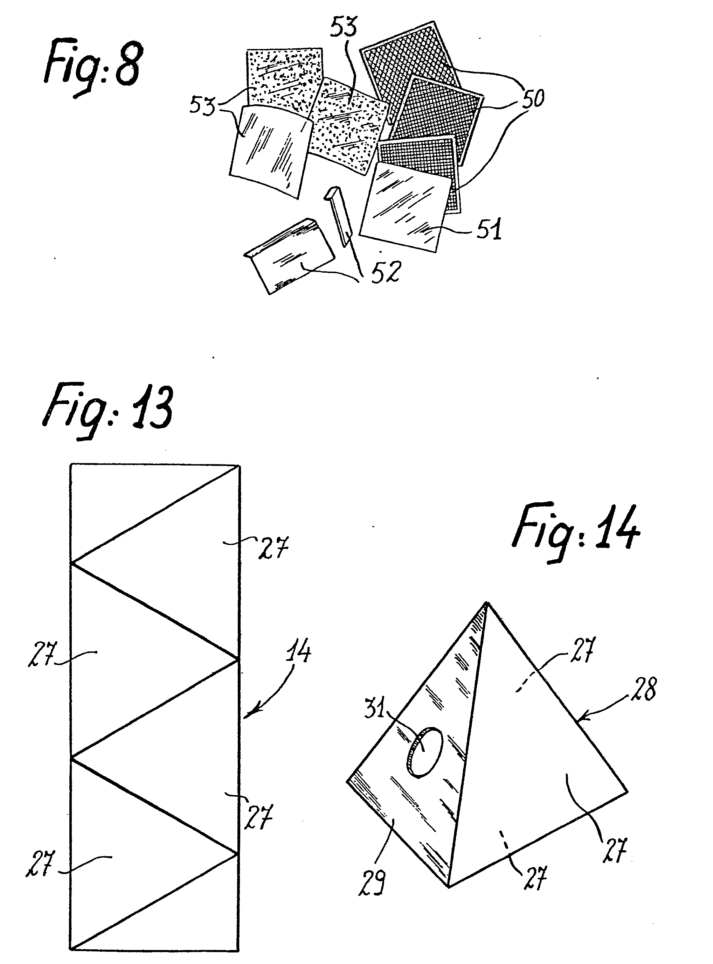

La face frontale médiane 10 réservée entre les deux faces frontales 5 translucides, peut être avantageusement pourvue d'accessoires tels que grilles-spots 50 (figure 8) en nids d'abeilles noirs ou gris donnant des angles d'éclairement pouvant varier de 10 degrés à 40 degrés, diffuseur amovible 51, deux coupe-flux amovibles 52 (figures 7 et 8), filtres 53 de couleurs diverses, ou filtre polarisant.

Suivant une particularité de l'invention, la source de lumière constituée par l'appareil d'éclairage représenté à la figure 1 est munie de deux volets réfléchissants intérieurs 54 montés de part et d'autre de la source lumineuse centrale, et articulés sur le fond 2 entre les faces latérales 4. Ces volets 54 sont chacun constitués dans l'exemple décrit, de préférence d'au moins deux éléments F, G, articulés entre eux autour d'un axe géométrique 55, non visible de façon à pouvoir se plier entre deux positions extrêmes dans lesquelles ils sont dans le prolongement l'un de l'autre. L'élément supérieur F est pourvu de deux ailes latérales H.

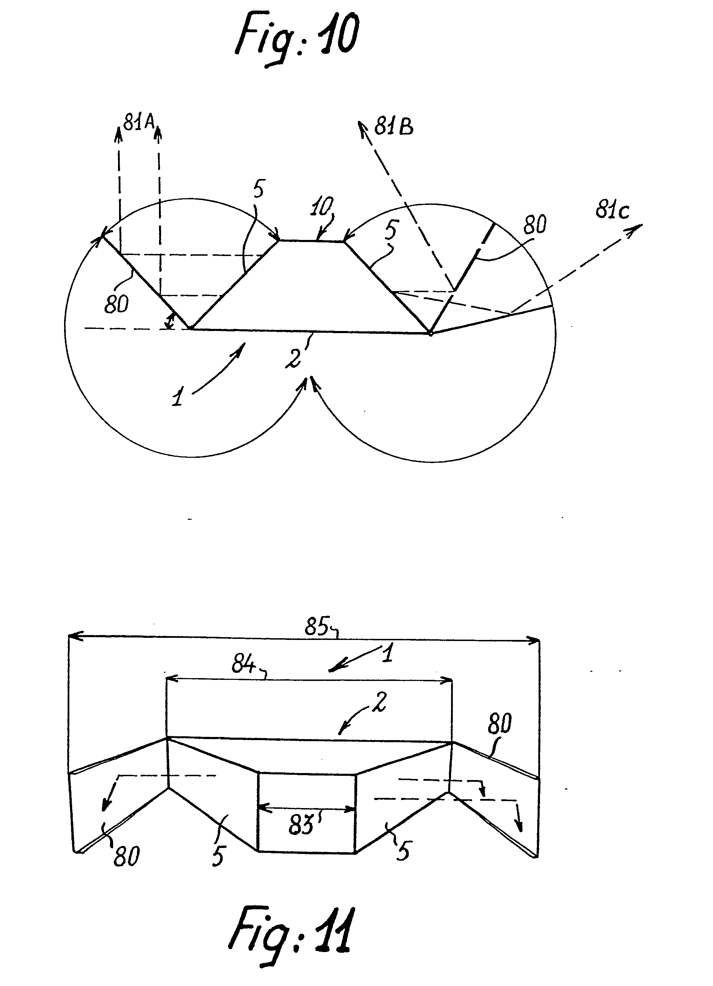

On voit ainsi sur la figure 9 une première position de ces volets, référencée 54A dans laquelle ils sont perpendiculaires au plan du fond 2, et une seconde position 54B dans laquelle ils sont rabattus sur celui-ci, des moyens étant prévus pour manœuvrer ces volets afin de les placer dans la position angulaire choisie et pour les fixer dans cette position. On a également représenté à la figure 9 différentes positions angulaires intermédiaires 54C, 54D, 54E, des volets 54, pour lesquelles on voit que l'élément supérieur F de chaque volet pivote par rapport à l'élément inférieur G autour de l'axe. Cela lui permet de ne pas venir frotter contre la face translucide correspondante 5, et de pouvoir donner une inclinaison différente pour les deux parties de chaque volet, afin de réfléchir la lumière de manière plus efficace.

Les volets réfléchissants 54, sont dans l'exemple décrit pourvus d'ailes latérales H inclinées par rapport aux sections F, et ont en quelque sorte une « géométrie variable », grâce à l'articulation entre les deux sections F, G, autour du pivot intermédiaire 55.27 représentant la source lumineuse introduite par l'ouverture 3 du fond 2, et fixée convenablement à celui-ci de façon connue, on voit que le faisceau lumineux émis par cette source peut prendre différentes configurations en fonction de la position angulaire des volets 54, les trajets des rayons lumineux réfléchis par les volets 54 étant représentés en traits continus.

Dans l'exemple illustré à la figure 1, les moyens de manœuvre des volets réfléchissants 54 sont constitués par des tringles (non visibles à la figure 1) qui viennent s'engager chacune dans un volet 54 en traversant une fente 57 ménagée sur une face latérale 4 ; le va-et-vient d'une tringle dans la fente 57 permet d'entraîner en rotation l'ensemble du volet 54 correspondant autour d'un axe transversal 58 (figure 9) situé sur le fond 2. Chaque volet 54 peut être bloqué dans la position angulaire choisie par simple vissage d'un écrou extérieur 7 de manœuvre, solidaire de la tringle sur la fente 57. Bien entendu, d'autres systèmes de manœuvre et de blocage des volets 54 peuvent être utilisés.

Lorsque les volets sont en position serrée, rapprochés l'un de l'autre vers l'avant, et si la face frontale 10 peut être facilement enlevée, on peut doubler ou tripler la lumière.

On remarquera que les ailes H inclinées, complètent la réflexion de la lumière assurée par les éléments F et G.

L'appareil d'éclairage ainsi réalisé peut recevoir une source lumineuse susceptible d'être introduite par l'ouverture 3, et être équipé d'un manchon cylindrique non représenté, fixé extérieurement au fond 2 et coaxialement à l'ouverture 3. Ce manchon vient s'enfiler sur un support non représenté, autour duquel il peut pivoter en faisant prendre corrélativement des inclinaisons différentes au projecteur. Si l'axe du manchon est horizontal, le projecteur peut donc pivoter autour d'un axe horizontal.

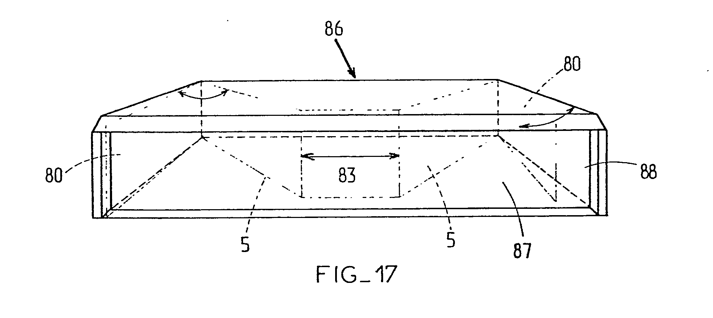

Suivant trois procédés de fabrication possibles (figures 2, 3, 4) on part d'une feuille carrée 60, ou rectangulaire 66, 70, on trace sur celle-ci les côtés 61, 61a du fond 63 (distance «L» et 74a), suivant une inclinaison choisie par rapport à la diagonale du rectangle ou du carré, puis on replie la feuille 60, 66, 70 le long des côtés 61, 61a du fond afin d'obtenir deux surfaces latérales 62, 4, 73 ayant une inclinaison choisie par rapport au fond; par exemple l'angle K (figure 12). On complète ensuite l'enveloppe en formant les faces frontales en un matériau diffuseur translucide, qu'on assemble aux côtés des faces latérales 62, 4, 73.

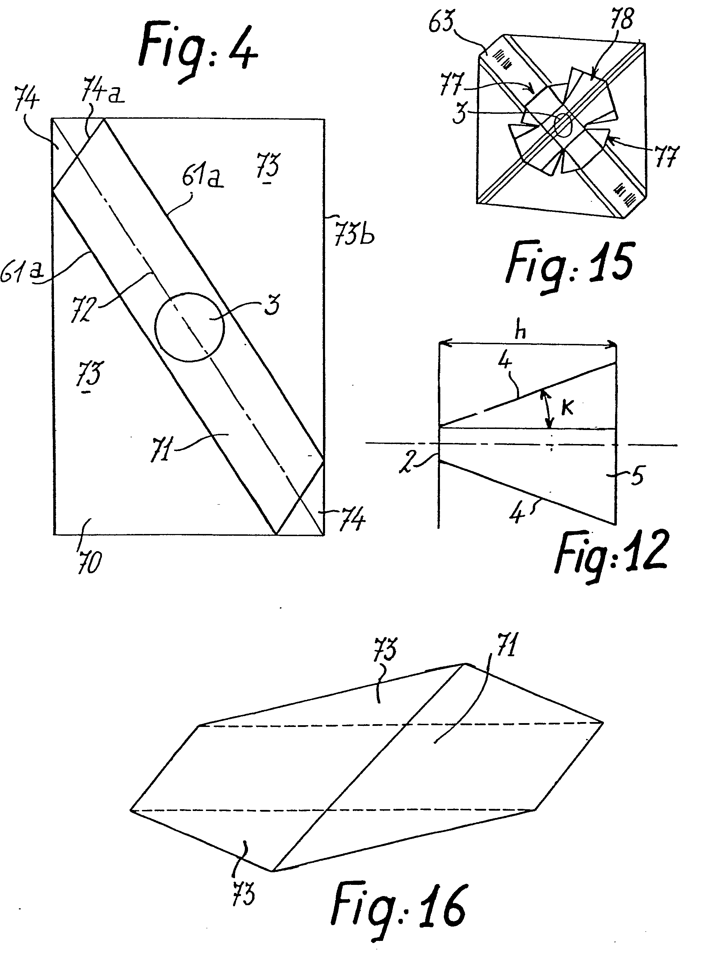

Dans le cas de la figure 4, les faces latérales 73 sont triangulaires, dans ceux des figures 2 et 3, les faces 62, 4 sont trapézoïdales après découpe des coins 64, 67.

On découpe aux extrémités du fond 63, 72 (figures 2 et 4) deux triangles 65, 74 dont les bases sont égales à la largeur 1 du fond 63. Dans le cas des figures 2 et 4, les côtés 61 du fond 63, 71 sont parallèles à la diagonale du carré 60 et du rectangle 70. Enfin dans les trois cas, on découpe dans les fonds 63, 71 des trous 3 permettant de recevoir la source lumineuse dans le projecteur, l'enveloppe obtenue à partir de la figure 4 étant représentée à la figure 16.

On peut aussi ne pas couper les quatre coins 67, et on obtient alors deux faces latérales rectangulaires à la place des faces trapézoïdales 4. De ce fait, les deux faces latérales translucides sont perpendiculaires au fond 63.

On a déjà indiqué que l'on peut contrôler le degré de netteté de l'ombre en tournant un projecteur asymétrique autour de son support, afin de changer la largeur effective de la source de lumière. Les volets réfléchissants intérieurs 54 et les volets réfléchissants extérieurs 80 (figures 10, 11) peuvent être utilisés à cette même fin, car en les actionnant, on fait varier la longueur effective du dispositif de lumière. Ces volets servent également à faire varier la puissance lumineuse, pour faire varier la brillance et la grandeur des reflets, pour contrôler la saturation des couleurs du sujet, ainsi que pour permettre l'utilisation du projecteur avec des accessoires de dimensions plus petites que la longueur totale du projecteur, tels que coupe-flux 52 (figures 7 et 8), grille-spot 50 (figures 6, 7, 8), filtre polarisant ou de couleur 53 (figure 8).

Les volets 54 et 80 fournissent en outre un moyen de contrôle précis pour faire varier l'effet des filtres, c'est-à-dire pour faire varier la saturation de couleur de la lumière, le degré Kelvin de la lumière. Ceci est dû aux raisons suivantes :

— Quand les volets 54 sont en position serrée 54A (figure 9), c'est-à-dire lorsque les deux sections F, G, sont dans le prolongement l'une de l'autre et perpendiculaires au fond 2, toute la lumière passe à travers un filtre placé sur la face carrée avant 10. Aussi quand les deux volets 80 sont rabattus contre les deux faces translucides 5, la lumière ne peut sortir que par la face centrale 10.

— Au fur et à mesure que l'on ouvre les volets 54, vers les positions intermédiaires 54C, 54D, on laisse la lumière non filtrée sortir du projecteur par les faces translucides ou opalines 5, donc sans passer par le filtre central, ce qui dilue ainsi (ou désature) la lumière filtrée par le filtre. Ce même état de chose se passe également au fur et à mesure qu'on ouvre les volets extérieurs 80.

De la même manière, on peut faire varier le contraste d'éclairage, car si les volets réfléchissants 54 sont en position serrée 54A, on envoie d'une manière concentrée toute la lumière vers le sujet. On peut aussi réduire davantage l'angle d'éclairement en utilisant en plus les grilles-spots 50 ou les coupe-flux 52 attachés sur la face avant du projecteur. On obtient donc une lumière très contrastée, très dirigée et venant d'une source relativement petite en largeur. Il y a très peu de lumière éclairant les ombres et les alentours. Or quand on ouvre progressivement les volets réfléchissants 54, on éclaire de plus en plus un angle grandissant avec une lumière plus diffuse venant d'une surface grandissante. En même temps, on réduit la quantité de lumière dirigée venant de la zone centrale. Ainsi le contraste baisse progressivement et la netteté des ombres devient de plus en plus diffuse. Finalement, on peut rajouter le diffuseur devant la partie centrale pour augmenter cette progression.

Les volets réfléchissants 80, de préférence en aluminium brillant, et ayant des dimensions similaires aux deux faces translucides, permettent aussi de faire varier le contraste en laissant d'abord plus ou moins de lumière sortir des faces translucides 5 et ensuite de réfléchir vers le sujet, une partie de cette lumière restante, éclaircissant ainsi l'ombre derrière le sujet.

Si l'angle de l'inclinaison des faces latérales 4 est suffisamment ouvert (environ 45°) on peut mieux contrôler la lumière avec quatre volets intérieurs réfléchissants 77, 78 (figure 15).

En effet, le fait de monter quatre volets au lieu de deux permet de renvoyer vers le sujet davantage de lumière qu'avec deux volets tels que 77.

Si la face frontale 10 est munie d'une surface diffusante, en actionnant les volets 80 on change la longueur effective de la source de lumière de 83 (figure 11) (longueur de la face 10), à 84 (longueur du fond 2) et jusqu'à 85, donnant ainsi une ombre de plus en plus diffuse et vice-versa. Plus le rapport est grand entre 83 et 85, plus la variation de la netteté de l'ombre derrière le sujet sera grande.

On peut aussi réfléchir (figure 10) les rayons de lumière venant des deux faces latérales 5, soit directement devant (81A), soit les faire converger vers un point axial (rayons 81B), soit vers un autre point ailleurs 81C. Chaque volet réfléchissant extérieur 80 peut être réglé indépendamment l'un de l'autre. L'orientation de ces deux volets 80 change aussi la brillance et la grandeur des reflets, car la brillance des reflets sera d'autant plus forte et la grandeur des reflets sera d'autant plus petite, que la surface de la source lumineuse est plus petite. Les volets réfléchissants 54 contrôlent également ces deux caractéristiques de la lumière.

Les volets 54, réalisés de préférence en aluminium brillanté, peuvent être actionnés soit tous les deux en même temps, soit indépendamment l'un de l'autre par des moyens connus en soi tels que ceux visibles à la figure 1, avec un système de verrouillage tel les écrous 7 mentionnés ci-dessus (figure 1). Leur positionnement peut être indiqué clairement sur l'extérieur de la boîte à lumière constituée par le projecteur, pour permettre leur repérage.

Les volets peuvent également être de simples rectangles au lieu des assemblages à deux sections et ailes latérales H décrits ci-dessus, mais on obtient un meilleur rendement en faisant croître leur largeur avec leur éloignement de la source lumineuse 27, et en formant les volets pour leur donner un profil leur permettant d'être couchés complètement contre le fond 2 et les faces latérales 4.

Il est cependant avantageux de réaliser chaque volet réfléchissant en plusieurs sections telles que F, G, H, afin de capter le maximum de lumière et de lui donner une géométrie variable, les deux sections principales F et G étant articulées l'une par rapport à l'autre. Ce type de réalisation présente plusieurs avantages :

1. Le profil du volet peut approcher, lorsque les deux sections forment un angle serré tel qu'en 54C (figure 9), le profil d'un réflecteur parabolique, ce qui fournit ainsi davantage de lumière.

2. En position finale lorsque le volet est placé au maximum vers l'avant (position 54A), on a intérêt à ce que le volet ne laisse pas échapper la lumière autrement que par la face avant carrée ou rectangulaire F.

3. En position totalement ouverte 54B, les éléments de chaque volet sont tous couchés contre le fond 2, et ne font donc pas obstacle au passage des rayons lumineux qui sortiront par les côtés opposés du projecteur.

Avec les volets 54 en position serrée, et avec la face centrale 10 ouverte, on peut réduire l'angle et augmenter la lumière (tout en réduisant l'angle éclairé) en plaçant un boîtier réflecteur additionnel (non représenté) dans le cadre pourtour 11 de la face centrale 10.

Vu de côté (figure 13), le dispositif a une section trapézoïdale, dont l'ouverture dépend de l'inclinaison des faces latérales 4 sur le fond 2.

Avec la face centrale 10 munie du diffuseur et les volets 54 rabattus contre le fond 2 et les volets 80 placés en arrière du plan du fond 2, l'éclairage latéral par rapport à l'éclairage axial est le rapport entre la profondeur h (figure 12) et la longueur 84 (figure 11) du fond 2, ce rapport étant de préférence entre 0.3 et 0.5.

On a représenté à la figure 14 un troisième mode de réalisation possible de la source de lumière visée par l'invention, et à la figure 13 un procédé de fabrication de cette source à la lumière.

Suivant ce procédé, on plie la bande 14, constituée cette fois par un matériau translucide approprié suffisamment rigide, le long des côtés de quatre triangles isocèles successifs 27. On découpe la portion de bande comprenant ces quatre triangles isocèles 27, que l'on plie ensuite le long de leurs côtés adjacents afin de constituer un tétraèdre 28 (figure 14) dont une face 29 peut éventuellement être percée d'une ouverture 31 destinée à permettre l'introduction d'une source lumineuse dans le tétraèdre. La face 29 peut être revêtue en outre d'une couche intérieure opaque et réfléchissante, de même qu'éventuellement une seconde face du tétraèdre.

Le dispositif ainsi obtenu peut servir comme panneau lumineux ou comme luminaire dans des pièces d'habitation ou dans des halls ou des couloirs d'immeubles, cette lampe diffusant la lumière à travers les trois côtés translucides du tétraèdre.

On peut ainsi, dans une bande 14 de longueur déterminée, découper une série de triangles isocèles, de dimensions déterminées et constituer autant de tétraèdres qu'il y a de groupes consécutifs de quatre triangles isocèles.

L'invention n'est pas limitée aux modes de réalisation de l'appareil d'éclairage et des procédés correspondants de fabrication décrits ci-dessus, et peut comporter de nombreuses variantes d'exécution. Ainsi, d'une manière générale, la source de lumière à usage de projecteur ou de luminaire visée par l'invention comporte une enveloppe polyédrique formée de quatre à sept surfaces planes à bords rectilignes dont au moins une partie est translucide ou opaline, les autres surfaces étant opaques et réfléchissantes. Une variante possible consiste à réaliser une enveloppe formée de quatre surfaces dont l'une est translucide ou opaline pour permettre la diffusion de la lumière et présente des parties terminales opposées incurvées en correspondance avec des bords incurvés des deux surfaces latérales, la quatrième surface constituant le fond étant percée pour permettre l'introduction de la source lumineuse.

Cependant, les projecteurs ainsi réalisés ont un prix de revient plus élevé, car ils nécessitent soit des moules, soit des outils de découpe spéciaux. De tels projecteurs ont une surface lumineuse bombée et translucide ou opaline, et ils peuvent être aménagés afin de recevoir les mêmes éléments de contrôle et les mêmes accessoires que décrits ci-dessus.

En règle générale, au moins deux des surfaces translucides ou opalines sont inclinées par rapport à la base ou au fond, afin qu'elles puissent être visibles du côté perpendiculaire à ladite base ou audit fond, ce qui évite la baisse de lumière avec le cosinus de l'angle éclairé, et ce qui permet aux volets extérieurs 80 de réfléchir efficacement la lumière.

Lorsqu'on utilise un projecteur de forme de tétraèdre équilatéral ou en forme de tétraèdre tronqué, on peut avoir des effets de lumière colorés très intéressants en montant sur la base triangulaire autour de la source lumineuse, trois volets triangulaires filtrants et en les actionnant. Si on utilise trois filtres de couleurs primaires, on éclairera chaque face plus ou moins avec une des trois couleurs primaires, en donnant ainsi des effets visuels très jolis et en permettant également la variation de la couleur résultant des trois faces.

Si on utilise trois filtres de couleurs complémentaires en regardant le projecteur, on aura des effets visuels très esthétiques, mais sans grand changement de couleurs totales. On peut également utiliser tout autre choix de filtres, ainsi qu'en outre une série de volets opaques, si l'on désire éliminer la lumière sortant de l'une ou l'autre des deux autres faces.

Lorsque le dispositif est utilisé comme panneau lumineux, les informations inscrites sur les demi-faces translucides peuvent être lues aisément à partir de directions formant entre elles un angle supérieur à celui permettant la lecture d'indications portées sur les panneaux plans habituels.

Un autre avantage du dispositif selon l'invention provient du fait que l'on peut y installer des lampes incandescentes normales dans ses applications comme panneau lumineux, au lieu des tubes fluorescents encombrants et onéreux avec leur moyen de fixation annexe.

Au cas où l'on désire illuminer un champ plus court, les volets intérieurs permettent la réduction de la largeur de la zone éclairée avec une augmentation proportionnelle de l'intensité lumineuse.

Il peut être souhaitable de placer le dispositif (complété avec les volets extérieurs réfléchissants dans une quelconque des positions choisies, représentées aux figures 10 et 11) dans un boîtier extérieur, ou enveloppe 86, dont l'intérieur 87 est réfléchissant à la lumière, et qui présente une face frontale 88 rectangulaire, ouverte, ou transparente, ou translucide ou opaline. Cette dernière peut avantageusement être équipée de filtres, grilles-spots et autres accessoires.

La source de lumière sera ainsi plus « attractive » et aura une face frontale plus homogène lorsqu'elle est pourvue d'un diffuseur translucide ou opalin, évitant ainsi des ombres multiples. Dans une forme commercialement intéressante le boîtier 86 est formé d'une feuille unique de polypropylène qui peut être pliée à plat pour le transport, et ensuite mise sous trois formes dimensionnelles. Cependant, d'autres matériaux peuvent être utilisés.

## Revendications

1. Dispositif lumineux à usage de projecteur pour la photographie, le cinéma ou la télévision, comportant une enveloppe polyédrique formée de parois planes et dont le fond rectangulaire réfléchissant comporte une source lumineuse, cependant que certaines des parois sont translucides, caractérisé en ce que les deux parois (4) partant des longs côtés du fond sont opaques alors que les deux parois (5) partant des côtés courts, qui sont translucides, sont inclinées par rapport au fond (2), l'une vers l'autre pour que leurs bords extrêmes délimitent, avec les bords extrêmes des parois opaques (4), une face centrale (10) destinée à recevoir des accessoires divers, tels que diffuseur, grille-spot, filtre.

2. Dispositif selon la revendication 1, caractérisé en ce qu'il est muni d'au moins deux volets réfléchissants (54) montés de part et d'autre de la source lumineuse à l'intérieur de l'enveloppe et articulés sur le fond (2) entre les parois latérales, translucides de façon à pouvoir se placer entre deux positions extrêmes, à savoir une première position dans laquelle ils sont placés dans une position transversale au plan du fond (2) et une seconde position dans laquelle ils sont rabattus sur celui-ci, des moyens étant prévus pour manœuvrer ces volets (54) afin de les placer dans la position angulaire choisie et pour les fixer dans cette position.

3. Dispositif selon la revendication 2, caractérisé en ce que les volets (54) sont constitués chacun d'au moins deux éléments (F, G) articulés entre eux de façon à pouvoir se plier entre les deux positions extrêmes dans lesquelles ils sont dans le prolongement l'une sur l'autre.

4. Dispositif selon la revendication 3, caractérisé en ce que les volets extérieurs réfléchissants réglables (80) sont articulés sur les bords communs du fond (2) et des parois translucides, inclinées l'une vers l'autre.

5. Dispositif selon la revendication 4, caractérisé en ce que le dispositif complet, avec les volets extérieurs réfléchissants (80), est placé dans un boîtier extérieur ou enveloppe présentant une face frontale ouverte, ou transparente ou translucide.

6. Dispositif selon l'une des revendications 1 à 4, caractérisé en ce qu'il comporte un assemblage de faces triangulaires ou trapézoïdales constituant soit une pyramide, soit un tronc de pyramide.

7. Procédé de fabrication d'un dispositif selon la revendication 1, caractérisé en ce que, de façon connue en soi, on trace sur une feuille rectangulaire les côtés du fond suivant une inclinaison choisie par rapport à la diagonale du rectangle, puis on replie la feuille le long des côtés du fond afin d'obtenir deux surfaces latérales ayant une inclinaison choisie par rapport au fond, et on complète l'enveloppe en formant deux faces frontales en un matériau diffuseur, translucide qu'on assemble aux côtés des faces latérales précitées, et en ce que les faces latérales sont :
— soit triangulaires,
— soit trapézoïdales,
— soit trapézoïdales après découpe des coins des deux sommets des faces triangulaires obtenues, la face frontale intercalaire, de forme rectangulaire, résultant des faces trapézoïdales, pouvant être équipée d'accessoires tels que filtres, grilles-spots, et diffuseur.

## Claims

1. Lighting device intended to be used as a projector for photography, cinema or television, comprising a polyhedral envelope which is formed by flat walls and the reflecting rectangular end-wall of which is fitted with a light source whilst a certain number of walls are translucent, characterized in that the two walls (4) extending from the long sides of the end-wall are opaque whereas the two walls (5) which extend from the short sides and which are translucent are inclined with respect to the end-wall (2) and toward each other so that their end edges delimit with the end edges of the opaque walls (4) a central face (10) which is intended to receive various accessories such as a diffuser, spotlight-grid, filter.

2. Device in accordance with claim 1, characterized in that it is provided with at least two reflecting flaps (54) mounted on each side of the light source inside the envelope and hinged on the end-wall (2) between the translucent side walls in order that they may be placed between two end positions, namely a first position in which they are placed in a transverse position with respect to the plane of the end-wall (2) and a second position in which they are folded-back against this latter, means being provided for actuating these flaps (54) in order to place them in the predetermined angular position and in order to fix them in this position.

3. Device in accordance with claim 2, characterized in that the flaps (54) are each constituted by at least two elements (F, G) joined to each other in hinged relation in order to be capable of folding between the two end positions in which they are in the line of extension of each other.

4. Device in accordance with claim 3, characterized in that the adjustable reflecting external flaps (80) are hinged on the common edges of the end-wall (2) and of the translucent walls which are inclined toward each other.

5. Device in accordance with claim 4, characterized in that the complete device together with the reflecting external flaps (80) is placed within an external casing or envelope having a front face which is open or transparent or translucent.

6. Device in accordance with one of claims 1 to 4, characterized in that it comprises an assembly of triangular or trapezoidal faces which constitute either a pyramid or a pyramid frustum.

7. Method of manufacture of a device in accordance with claim 1, characterized in that, in a manner known *per se*, the sides of the end-wall are marked on a rectangular sheet at a predetermined angle of slope with respect to the diagonal of the rectangle, whereupon the sheet is folded along the sides of the end-wall in order to obtain two lateral surfaces having a predetermined angle of slope with respect to the end-wall and the envelope is completed by forming two front faces of a translucent diffusing material which is joined to the sides of the lateral faces aforesaid, and that the lateral faces are :
— either triangular,
— or trapezoidal,
— or trapezoidal after cutting of the corners of the two apices of the triangular faces obtained, and the intercalary front face of rectangular shape formed as a result of the trapezoidal faces can be equipped with accessories such as filters, spotlight-grids, and diffuser.

## Ansprüche

1. Leuchteinrichtung für die Verwendung in Scheinwerfern für die Fotografie, den Film oder das Fernsehen mit einem vielflächigen Gehäuse aus ebenen Wänden, dessen rechteckige, reflektierende Rückwand eine Lichtquelle aufweist, wobei gewisse Wände durchsichtig sind, dadurch gekennzeichnet, daß die beiden Wände (4) an den langen Seiten der Rückwand opak sind und die beiden Wände (5) an den kurzen Seiten, die durchsichtig sind, gegenüber der Rückwand (2) gegeneinander geneigt sind, damit ihre Außenkanten mit den Außenkanten der opaken Wände (4) eine zentrale Fläche (10) begrenzen, die zur Aufnahme verschiedener Zubehörteile, wie Diffusoren, Gitter und Filter, bestimmt ist.

2. Einrichtung gemäß Anspruch 1, dadurch gekennzeichnet, daß sie mit mindestens zwei reflektierenden Flügeln (54) ausgestattet ist, die beiderseits der Lichtquelle im Innern des Gehäuses angeordnet sind und an der Rückwand (2) zwischen den durchsichtigen Seitenwänden derart schwenkbar angebracht sind, daß sie in zwei Extremstellungen bringbar sind, d. h., in eine erste quer zur Ebene der Rückwand (2) verlaufende Stellung und eine zweite Stellung, in der sie auf diese geklappt sind, wobei Mittel zum Bewegen der Flügel (54) vorgesehen sind, um sie in die gewählte Winkelstellung zu bringen und dort festzuhalten.

3. Einrichtung nach Anspruch 2, dadurch gekennzeichnet, daß die Flügel (54) jeweils aus mindestens zwei Elementen (F, G) gebildet sind, die derart zueinander schwenkbar sind, daß sie sich zwischen den Extremstellungen, in denen sie jeweils in der Verbiegung des anderen liegen, einklappen lassen.

4. Einrichtung nach Anspruch 3, dadurch gekennzeichnet, daß die äußeren, reflektierenden, einstellbaren Flügel (54) an die anstoßenden Kanten der Rückwand (2) angelenkt sind, wobei die durchsichtigen Wände aufeinander zu geneigt sind.

5. Einrichtung nach Anspruch 4, dadurch gekennzeichnet, daß die gesamte Einrichtung mit den reflektierenden Außenflügeln (80) in einem Gehäuse oder Ummantelung untergebracht ist, welches eine offene oder transparente oder durchsichtige Öffnung aufweist.

6. Einrichtung nach einem der Ansprüche 1 bis 4, gekennzeichnet durch Aufbau mit dreieckigen oder trapezförmigen Flächen, die eine Paramide oder einen Pyramidenstumpf bilden.

7. Verfahren zur Herstellung der Einrichtung gemäß Anspruch 1, dadurch gekennzeichnet, daß in an sich bekannter Weise auf einer rechtwinkligen Platte die Seiten in einer gewählten Neigung in bezug zu den Diagonalen des Rechtecks aufgerissen werden und die Platte dann an den Kanten der Rückwand umgefaltet wird, um zwei Seitenflächen mit der in bezug zur Rückwand gewählten Neigung zu erhalten, woraufhin das Gehäuse vervollständigt wird, indem zwei Vorderseiten aus streuendem, durchsichtigem Material gebildet werden, die an die vorgenannten Seitenflächen angefügt werden, und dadurch, daß die Seitenwände

— dreieckig
— trapezförmig oder
— trapezförming nach dem Entfernen der Ecken der beiden sich aus den Dreiecksflächen ergebenden Spitzen sind, wobei die eingesetzte, rechteckige Vorderfläche, die sich aus den Trapezflächen ergibt, mit Zubehörteilen ausgestattet werden kann, wie z. B. Filter, Gitter und Diffusoren.

Fig:1

Fig:2

Fig:3

Fig. 4

Fig. 15

Fig. 12

Fig. 16

Fig: 5

Fig: 6

Fig: 7

Fig: 9

Fig: 8

Fig: 13

Fig: 14

27 27 27 27 14 27

31 27 28 29 27 27

# Fig: 10

# Fig: 11

FIG_17